Europäisches Patentamt

European Patent Office

Office européen des brevets

(11) Veröffentlichungsnummer: **0 242 726**
**A1**

## (12) EUROPÄISCHE PATENTANMELDUNG

(21) Anmeldenummer: **87105294.0**

(22) Anmeldetag: **09.04.87**

(51) Int. Cl.⁴: **H02K 11/00**

(30) Priorität: **23.04.86 US 855512**

(43) Veröffentlichungstag der Anmeldung:
**28.10.87 Patentblatt 87/44**

(84) Benannte Vertragsstaaten:
**CH DE GB LI SE**

(71) Anmelder: **Siemens Aktiengesellschaft Berlin und München**
**Wittelsbacherplatz 2**
**D-8000 München 2(DE)**

(72) Erfinder: **McKean, Joseph T.**
**4101 South Church Drive**
**New Berlin, WI 53151(US)**

(54) **Montagevorrichtung für elektrische Komponenten in einer bürstenlosen Erregervorrichtung.**

(57) Eine Montagevorrichtung für elektrische Komponenten (20-23, 25, 27, 29) in einer bürstenlosen Erregervorrichtung (10) besteht aus einer flachen Grundplatte (14), welche senkrecht auf der Welle (13) der Erregervorrichtung (10) angebracht ist. Eine Vielzahl von flachen Montageplatten (16) ist bevorzugt in Form eines gleichmäßigen Polygons bzw. Hexagons auf der einen Seite der flachen Grundplatte (14) angebracht. Auf der anderen Seite der Grundplatte (14) befindet sich ein Lüfter (24) zur Belüftung der gesamten bürstenlosen Erregervorrichtung (10). Die Montagevorrichtung aus Grundplatte (14), Montageplatten (16) und Lüfter (24) dient sowohl als Kühlkörper als auch als gemeinsamer elektrischer Verbindungspunkt für die elektrischen Komponenten (20-23, 25, 27, 29).

FIG 1

EP 0 242 726 A1

## Montagevorrichtung für elektrische Komponenten in einer bürstenlosen Erregervorrichtung

Die Erfindung betrifft eine Montagevorrichtung für elektrische Komponenten in einer bürstenlosen Erregervorrichtung.

Aus den US-Patentschriften 3 845 369 und 3 959 702 sind bereits Erregervorrichtungen für bürstenlose Synchronmaschinen bekannt. Jede dieser Vorrichtungen verfügt über einen Rotor, der mit rotierenden elektrischen Komponenten bestückt ist. Eine ringförmige Trägervorrichtung enthält die Steuer-und Schaltelemente für die Erregervorrichtung und vorzugsweise aus Aluminiumblöcken bestehende gebogene Kühlkörper, die elektrisch von der Unterlage isoliert auf der Innenseite eines Randes angebracht sind. Auf jedem Kühlkörper sind zwei Dioden angebracht und mit diesem sowohl thermisch als auch elektrisch leitend verbunden. Dabei dient der Kühlkörper als gemeinsamer Kontakt für die Kathode der einen bzw. die Anode der anderen Diode. Die Trägervorrichtung enthält drei Kühlkörper dieser Art und mindestens zwei weitere gebogene Kühlkörper, welche die Verlustwärme von Thyristoren und anderen integrierten Halbleiterschaltelementen abführen.

In der Schrift von J. L. Graggs mit dem Titel "New synchronous motor brushless excitation system", IEEE Conference paper, No. PC 168-41 ist eine weitere bürstenlose Erregervorrichtung dargestellt, welche einen rotierenden Umformer und einen zweiteiligen Lüfter zur Kühlung enthält. Dieser übernimmt gleichzeitig die Aufgabe von zwei isolierten Kühlkörpern, von denen der eine den positiven und der andere den negativen Anschluß für die Dioden darstellt. Die bürstenlose Erregervorrichtung hat zudem vier große isolierte Kühlkörper zur Aufnahme von Halbleiterschaltelementen. Diese Halbleiterschaltelemente, Dioden und andere elektronische Komponenten, werden für die Drehzahlregelung und einen sicheren Betrieb des Synchronmotors benötigt. Bekannte Montagevorrichtungen für elektrische Komponenten sind kompliziert aufgebaut und benötigen eine Vielzahl teurer Befestigungselemente. Ferner wurden bisher insbesondere von der Trägervorrichtung getrennt isolierte Unterteile zur Befestigung der Halbleiterschaltelemente und der Dioden benötigt.

So besteht die Aufgabe der vorliegenden Erfindung darin, eine Montagevorrichtung für elektrische Komponenten in einer bürstenlosen Erregervorrichtung für eine Synchronmaschiene anzugeben. Diese soll ein einfach gestaltetes Hauptteil enthalten, welches gleichzeitig als Lüfter und Kühlkörper dient. Die erfindungsgemäße Montagevorrichtung soll möglichst einfach gestaltet sein und einen gemeinsamen elektrischen Verbindungspunkt für möglichst viele der elektrischen Komponenten darstellen, um die notwendige Anzahl von elektrischen Verbindungsleitungen zu reduzieren und zusätzliche Isolierungen zu vermeiden.

Die Aufgabe wird gelöst mit Hilfe der in Anspruch 1 angegebenen Vorrichtung. Vorteilhafte Ausführungsformen dieser Vorrichtung sind in den Unteransprüchen angegeben.

Anhand der Figuren 1 bis 5 wird die Erfindung näher erläutert.
Dabei zeigt

FIG 1 eine vorteilhafte Ausführungsform der erfindungsgemäßen Vorrichtung in Draufsicht,

FIG 2 eine vergrößerte und durch die strichpunktierte Schnittlinie I in FIG 1 bestimmte Seitenansicht der vorteilhaften Ausführungsform,

FIG 3 eine vom Zentrum der FIG 1 nach unten gesehene Innenansicht,

FIG 4 eine vom Zentrum der FIG 1 nach rechts gesehene Innenansicht, und

FIG 5 eine entlang der Schnittlinie V in FIG 1 geführte und vergrößerte Darstellung einer Schraubverbindung der vorteilhaften Ausführungsform der erfindungsgemäßen Vorrichtung.

Grundbauteil der erfindungsgemäßen Montagevorrichtung für mitrotierende elektrische Komponenten in einer bürstenlosen Erregervorrichtung ist eine flache Grundplatte, die auf der Welle der Erregervorrichtung senkrecht zu deren Achse angebracht ist. Auf der einen Seite der flachen Grundplatte ist eine Vielzahl flacher Montageplatten zur Befestigung der elektrischen Komponenten angebracht, während sich direkt auf der anderen Seite ein Lüfter zur Belüftung der gesamten Erregervorrichtung befindet. Grundplatte, Montageplatten und Lüfter sind thermisch und elektrisch leitend miteinander verbunden. Auf diese Weise wird besonders vorteilhaft die von den elektrischen Komponenten erzeugte Verlustwärme abgeführt. Da die erfindungsgemäße Montagevorrichtung selbst einen ausreichenden Kühlkörper darstellt, kann auf separate Kühlkörper für die elektrischen Komponenten verzichtet werden.

Es ist besonders vorteilhaft, wenn die flachen Montageplatten rechteckförmige Gestalt haben und senkrecht auf der Grundplatte angebracht sind. Die mechanische Stabilität der erfindungsgemäßen Montagevorrichtung wird in einer weiteren Ausführungsform besonders dadurch verbessert, daß die Montageplatten eine geschlossene Struktur bilden, und insbesondere durch Verschweißung untereinander und mit der einen Seite der Grundplatte verbunden sind. Als Struktur dient bevorzugt ein Polygon bzw. ein rotationssymmetrisch zur Wellenachse angeordnetes gleichmäßiges Polygon. Diese Anordnung hat den besonderen Vorteil, daß die aus den flachen Montageplatten gebildeten Seiten des Polygons nichtgekrümmte Auflageflächen für die unter Umständen recht großen und blockförmigen elektrischen Komponenten darstellen.

In einer weiteren Ausführungsform der erfindungsgemäßen Montagevorrichtung ist die flache Grundplatte kreisförmig und hat bevorzugt einen Durchmesser, der dem Durchmesser der bürstenlosen Erregervorrichtung entspricht. Ein vorteilhaftes Material zur Ausführung der flachen Grundplatte ist Aluminium.

Die elektrischen Komponenten werden vorteilhaft auf den der Welle zugewandten Innenseiten der flachen Montageplatten angebracht, so daß bei Rotation nur Druck-und keine Zugkräfte auftreten. Zum Ausgleich möglicher Unwuchten durch unterschiedlich große Gewichte einzelner elektrischer Komponenten können die Kantenlängen der das Polygon bildenden Montageplatten entsprechend ausgewählt werden.

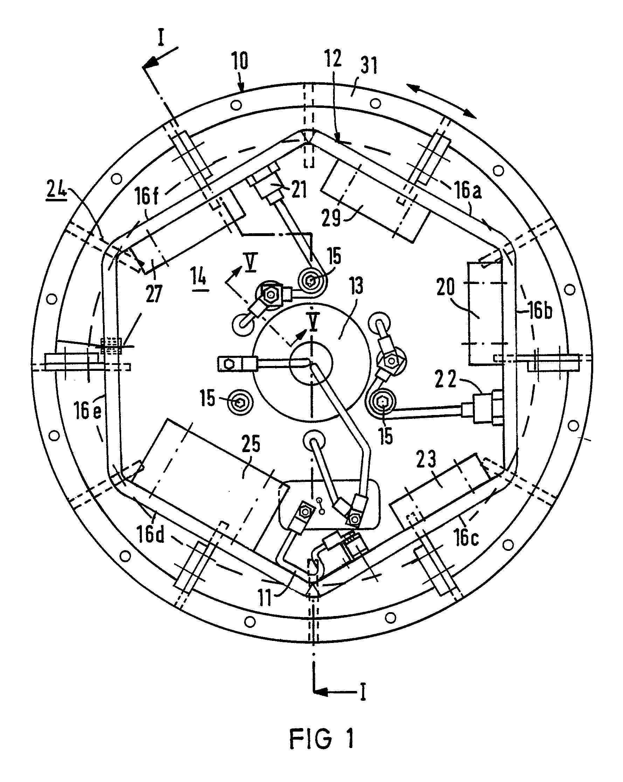

FIG 1 zeigt in Form einer Draufsicht eine vorteilhafte Ausführungsform der erfindungsgemäßen Vorrichtung in der bürstenlosen Erregervorrichtung 10. Die erfindungsgemäße Montagevorrichtung 12 dient als Träger für Halbleiterschaltelemente, Dioden und andere elektronische Komponenten. Eine Rotation der Erregervorrichtung 10 ist im Uhrzeiger-und im Gegenuhrzeigersinn möglich. Als Grundbauteil der Montagevorrichtung 12 ist die flache Grundplatte 14 senkrecht auf der Welle 13 der Erregervorrichtung angebracht. Auf der in der FIG 1 dargestellten einen Seite der Grundplatte 14 sind eine Vielzahl von flachen Montageplatten 16ff angebracht. Auf der nicht sichtbaren Rückseite der flachen Grundplatte 14 ist ein Lüfter 24 angebracht, von dem insbesondere die Lüfterflügel in FIG 1 mit strichlierten Linien dargestellt sind. Die Montageplatten sind rechteckförmig, senkrecht auf der flachen Grundplatte angebracht und bilden die Form eines zur Wellenachse rotationssymmetrischen gleichmäßigen Polygones. In der in der FIG 1 dargestellten bevorzugten Ausführungsform der erfindungsgemäßen Vorrichtung bilden sechs Montageplatten 16a bis 16f ein gleichmäßiges Hexagon. Die Montageflächen sind untereinander und gemeinsam mit der in FIG 1 dargestellten einen Seite der Grundplatte verschweißt. Zudem ist die flache Grundplatte 14 kreisförmig und hat einen Durchmesser, der dem Durchmesser der bürstenlosen Erregervorrichtung 10 entspricht.

Die Innenseiten der Montageplatten 16a bis 16f stellen, wie bereits ausgeführt, insbesondere in polygonaler bzw. hexagonaler Anordnung besonders geeignete flache Montageflächen für elektrische Komponenten der Erregervorrichtung dar. Im Ausführungsbeispiel der FIG 1 sind z.B. der Thyristor 22 und das elektrische Bauelement 20 in Oberflächenmontage auf der Innenseite der Montageplatte 16b angebracht. Weitere elektronische Bauelemente 23, 25, 27, 29 und ein weiterer Thyristor 21 sind auf die übrigen Montageplatteninnenseiten verteilt. Für die elektrischen Komponenten dient die erfindungsgemäße Montagevorrichtung 12 aus Grundplatte, Montageplatten und Lüfter sowohl als Kühlkörper als auch als ein gemeinsamer elektrischer Verbindungspunkt.

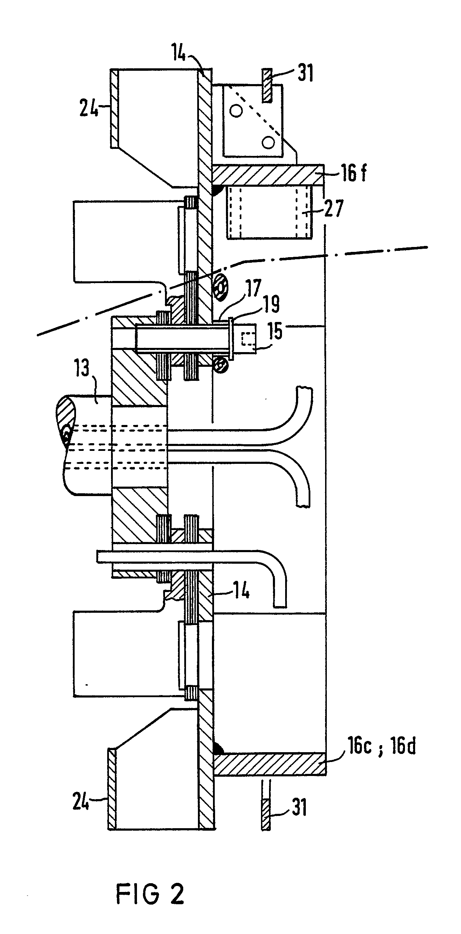

FIG 2 zeigt eine entlang der Schnittlinie I geführte Seitenansicht der vorteilhaften Ausführungsform der erfindungsgemäßen Montagevorrichtung gemäß FIG 1. Zwei Flügel des auf der Rückseite der Grundplatte 14 angebrachten Lüfters 24 sind nun im Schnitt zu sehen. Zudem sind im oberen Teil der FIG 2 die Montageplatte 16f und das Elektronikbauteil 27 im Schnitt dargestellt, während im unteren Teil der Schnitt gerade durch eine die Montageplatten 16c und 16d verbindende Schweißnaht führt. FIG 2 zeigt zudem einen Schnitt durch die Schraubverbindung 15. Diese dient einerseits als eine Befestigung der Grundplatte 14 auf der Welle 13 der Erregervorrichtung 10. Zum anderen dient sie zusammen mit einer Abstandshülse 17 und einer Scheibe 19 als Umlenk-und Abstützvorrichtung für die elektrische Zuleitung des Thyristors 21.

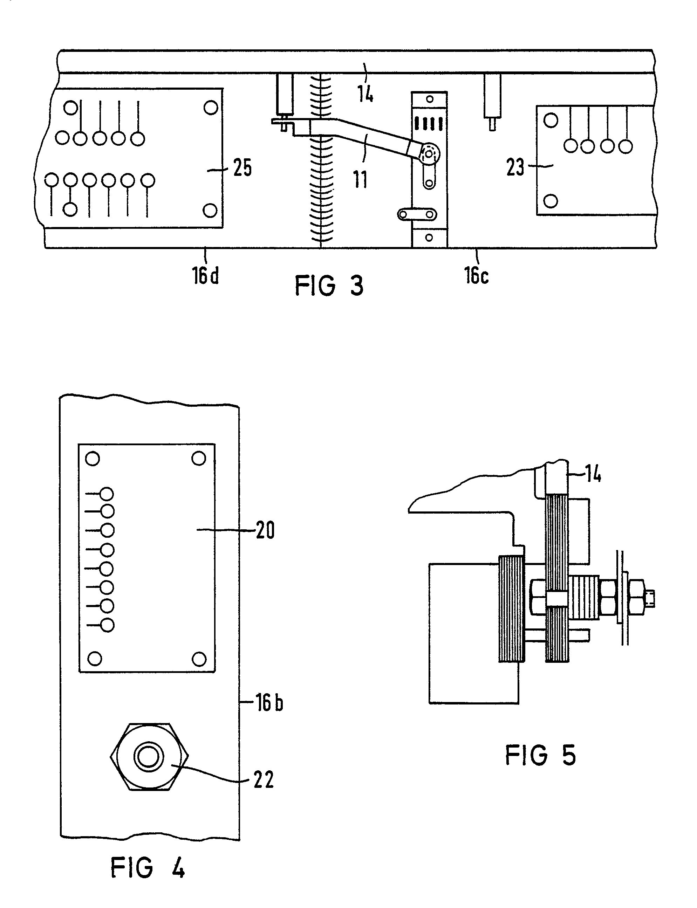

FIG 3 zeigt in vergrößerter Darstellung weitere Details der vorteilhaften Ausführungsform der FIG 1. Dabei ist ein vom Zentrum der FIG 1 nach unten gesehener Ausschnitt der Innenansicht dargestellt. Dieser zeigt in Draufsicht die Verbindungsstelle der beiden Montageplatten 16c und 16d und die darauf angebrachten elektronischen Bauelemente 23 und 25. Alle elektrischen Verbindungsleitungen, in FIG 3 z.B. die Leitung 11, sind vorteilhaft so geführt, daß diese selbst an Verbindungsstellen der Montageplatten in den Knickpunkten der polygonalen Anordnung abgestützt sind. Die bei schneller Rotation der Erregervorrichtung z.B. auf die Verbindungsleitungen einwirkenden Fliehkräfte werden somit an die Montageplatten abgeleitet und es wird jegliche Form von mechanischen Zugkräften vermieden.

FIG 4 zeigt ein weiteres Detail der vorteilhaften Ausführungsform der FIG 1. Dabei ist ein vom Zentrum der FIG 1 nach rechts gesehener Ausschnitt der Innenansicht dargestellt. Er zeigt die Montageplatte 16b mit den darauf angebrachten elektrischen Komponenten 22 und 20, welche einen Thyristor und ein elektronisches Bauelement sind.

In FIG 5 ist eine entlang der Schnittlinie V von FIG 1 geführte und vergrößerte Darstellung einer weiteren Schraubverbindung der vorteilhaften Ausführungsform dargestellt.

Die erfindungsgemäße Montagevorrichtung aus flacher Grundplatte mit flachen Montageplatten auf der einen und einem Lüfter auf der anderen Seite ermöglicht somit in besonders vorteilhafter Weise die gleichzeitige Befestigung und Kühlung von elektrischen Komponenten, ohne das zusätzlich besonders gestaltete Kühlkörper vorgesehen sein müßten.

**Ansprüche**

1. Montagevorrichtung für elektrische Komponenten in einer bürstenlosen Erregervorrichtung (10), **gekennzeichnet durch**

    a) eine flache Grundplatte (14), welche auf der Welle (13) der bürstenlosen Erregervorrichtung senkrecht zu deren Achse angebracht ist,

    b) flache Montageplatten (16) für elektrische Komponenten (20, 21, 22, 23, 25, 27, 29), welche auf der einen Seite der flachen Grundplatte angeordnet sind, und

    c) einen Lüfter (24), welcher auf der anderen Seite der flachen Grundplatte (14) angebracht ist (FIG 1).

2. Vorrichtung nach Anspruch 1, **gekennzeichnet durch** rechteckförmige und senkrecht auf der flachen Grundplatte angebrachte Montageplatten.

3. Vorrichtung nach Anspruch 2, **gekennzeichnet durch** in Form eines Polygones angeordnete Montageplatten.

4. Vorrichtung nach Anspruch 3, **gekennzeichnet durch** rotationssymmetrisch zur Wellenachse in Form eines gleichmäßigen Polygones angeordnete Montageplatten.

5. Vorrichtung nach einem der Ansprüche 3 oder 4, **gekennzeichnet durch** sechs in Form eines Hexagons angeordnete Montageplatten (16a - 16f).

6. Vorrichtung nach einem der Ansprüche 2 bis 5, **gekennzeichnet durch** untereinander und gemeinsam mit der einen Seite der flachen Grundplatte verschweißte Montageplatten.

7. Vorrichtung nach einem der Ansprüche 2 bis 6, **gekennzeichnet durch** eine kreisförmige flache Grundplatte (14).

8. Vorrichtung nach Anspruch 7, **dadurch gekennzeichnet**, daß die Durchmesser von Grundplatte (14) und bürstenloser Erregervorrichtung (10) identisch sind.

9. Vorrichtung nach einem der Ansprüche 2 bis 8, **gekennzeichnet durch** eine flache Grundplatte (14) aus Aluminium.

10. Vorrichtung nach einem der Ansprüche 3 bis 9, **dadurch gekennzeichnet**, daß die elektrischen Komponenten (20 - 29) der bürstenlosen Erregervorrichtung im Inneren des Polygones auf den der Welle zugewandten Seiten der Montageplatten (16) angebracht sind.

FIG 1

FIG 2

FIG 3

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-B-1 168 552 (PINTSCH BAMAG) <br><br> * Spalte 1, Zeile 46 - Spalte 4, Zeile 3; Figuren 1-3 * | 1-5,7, 8,10 | H 02 K 11/00 |
| Y | GB-A-1 017 026 (LICENTIA) <br><br> * Seite 1, Zeile 31 - Seite 2, Zeile 2; Figuren 1,2 * | 1-5,7, 8,10 | |
| A | FR-A-1 566 731 (JEUMONT-SCHNEIDER) <br> * Seite 1, rechte Spalte, Zeile 25 - Seite 2, rechte Spalte, Zeile 2; Figuren 1,2 * | 6-8,10 | |
| A | US-A-4 144 932 (VOIGT) <br> * Spalte 1, Zeilen 32-39; Spalte 2, Zeile 59 - Spalte 4, Zeile 20; Figuren 2-5 * | 7-9 | RECHERCHIERTE SACHGEBIETE (Int. Cl.4) <br><br> H 02 K |
| A | US-A-4 456 843 (HEYNE et al.) <br> * Spalte 4, Zeilen 10-35; Figur 4 * | 2-4,10 | |

Der vorliegende Recherchenbericht wurde für alle Patentansprüche erstellt.

| Recherchenort <br> DEN HAAG | Abschlußdatum der Recherche <br> 19-05-1987 | Prüfer <br> TIO K.H. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82